(19) Europäisches Patentamt / European Patent Office / Office européen des brevets

(11) **EP 4 391 425 A1**

(12) **EUROPEAN PATENT APPLICATION**

(43) Date of publication:
**26.06.2024 Bulletin 2024/26**

(21) Application number: **23218147.9**

(22) Date of filing: **19.12.2023**

(51) International Patent Classification (IPC):
*H04J 3/06* (2006.01)  *H04J 3/14* (2006.01)

(52) Cooperative Patent Classification (CPC):
**H04J 3/14; H04J 3/0667**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.12.2022 JP 2022202953**

(71) Applicant: **CANON KABUSHIKI KAISHA**
**Tokyo 146-8501 (JP)**

(72) Inventor: **SUZUKI, Motoharu**
**Tokyo, 146-8501 (JP)**

(74) Representative: **Canon Europe Limited**
**European Intellectual Property Group**
**4 Roundwood Avenue**
**Stockley Park**
**Uxbridge UB11 1AF (GB)**

(54) **COMMUNICATION APPARATUS, CONTROL METHOD THEREFOR, AND COMPUTER PROGRAM**

(57) A communication apparatus for connection to a time source apparatus via a first transmission path and a second transmission path performs packet communication with the time source apparatus according to Precision Time Protocol by using either the first transmission path or the second transmission path, synchronizes a time on the communication apparatus with a time on the time source apparatus by using a transmission delay value of the first transmission path if a transmission path used for the packet communication is the first transmission path, switches the transmission path if a predetermined condition is satisfied, and synchronizes the time on the communication apparatus with the time on the time source apparatus by using a transmission delay value of the second transmission path different from the transmission delay value of the first transmission path if the transmission path is switched from the first transmission path to the second transmission path.

**FIG.2**

Processed by Luminess, 75001 PARIS (FR)

EP 4 391 425 A1

**Description**

BACKGROUND OF THE INVENTION

Field of the Invention

The present invention relates to a time synchronization control technique.

Description of the Related Art

Precision Time Protocol (PTP) is a known communication protocol for time adjustment via a network. PTP is defined in the Institute of Electrical and Electronics Engineers (IEEE) 1588 version 2 (IEEE1588v2). Using PTP enables a client apparatus (hereinafter referred to as a "communication apparatus") to achieve accurate synchronization with the time on a time distribution server (hereinafter referred to as a "time server") functioning as a time source apparatus.

The time server and the communication apparatus perform time synchronization processing by using packets that are compliant with PTP (hereinafter referred to as PTP packets). More specifically, the communication apparatus measures a time (hereinafter referred to as a reception timestamp) at which the communication apparatus receives a PTP packet transmitted from the time server. The communication apparatus also measures a time (hereinafter referred to as a transmission timestamp) at which the communication apparatus transmits a PTP packet to the time server. The communication apparatus calculates a transmission delay (a network delay time) in the packet transmission and reception and a time difference with respect to the time server, based on time information indicated by the reception and transmission timestamps and time information included in a PTP packet transmitted from the time server.

Then, the communication apparatus performs synchronization processing with the time server by using the two calculation results. For the synchronization processing, it is desirable that the transmission delay in the packet transmission and reception be the same between an outbound packet path and a return packet path. However, in an actual environment, the transmission delay may differ between the outbound packet path and the return packet path.

Japanese Patent Application Laid-Open No. 2020-184710 discusses a time synchronization technique for a case where there is a difference in transmission delay between an outbound packet path and a return packet path. A communication control apparatus discussed in Japanese Patent Application Laid-Open No. 2020-184710 calculates the respective transmission delays of the outbound and return packet paths and performs synchronization processing when the two transmission delays are equal. In this way, the communication control apparatus improves the time synchronization accuracy in a system in which the transmission delays vary between the outbound and return packet paths.

To improve the robustness of the system, the communication apparatus may include two network interfaces (I/Fs) each of which is connected to a different transmission path. This enables the communication apparatus to perform the synchronization processing with the time server by using the other network I/F even if a failure occurs in one of the network I/Fs or the transmission path connected to this network I/F. However, if the lengths of the transmission paths connected to the two network I/Fs are different from each other, a difference in transmission delay occurs between the transmission paths. Thus, if the communication apparatus including the two network I/Fs switches the network I/F to be used, i.e., the transmission path to be used, the difference in transmission delay occurs before and after the switching. As described above, the communication apparatus calculates the transmission delay when performing the synchronization processing with the time server by using PTP packets. Thus, the difference in transmission delay before and after the switching of the transmission path leads to time accuracy degradation in the synchronization processing with the time server.

SUMMARY OF THE INVENTION

The present invention is directed to suppressing time accuracy degradation in synchronization processing even in a case where a transmission path is switched.

According to a first aspect of the present invention, there is provided a communication apparatus as specified in claims 1 to 10. According to a second aspect of the present invention, there is provided a control method for a communication apparatus as specified in claim 11. According to a third aspect of the present invention, there is provided a computer program as specified in claim 12.

Further features of the present invention will become apparent from the following description of embodiments with reference to the attached drawings.

BRIEF DESCRIPTION OF THE DRAWINGS

Fig. 1A is a diagram illustrating an example of a configuration of a time synchronization system according to an embodiment. Fig. 1B is a diagram illustrating a Precision Time Protocol (PTP) packet communication sequence according to the embodiment.

Fig. 2 is a block diagram illustrating an example of a configuration of a communication apparatus according to the embodiment.

Fig. 3 is a flowchart illustrating transmission path selection processing according to the embodiment.

Fig. 4 is a flowchart illustrating PTP processing according to the embodiment.

Fig. 5 is a flowchart illustrating processing for calculating a statistical transmission delay value according to the embodiment.

DESCRIPTION OF THE EMBODIMENTS

Hereinafter, an embodiment will be described in detail with reference to the accompanying drawings. The following embodiment does not intend to limit the invention according to the claims. Although a plurality of features is described in the embodiment, not all the features are essential to the invention, and the features may be combined as appropriate. In the accompanying drawings, the same or similar components are denoted by the same reference numerals, and a redundant description thereof will be omitted.

<Configuration of Time Synchronization System>

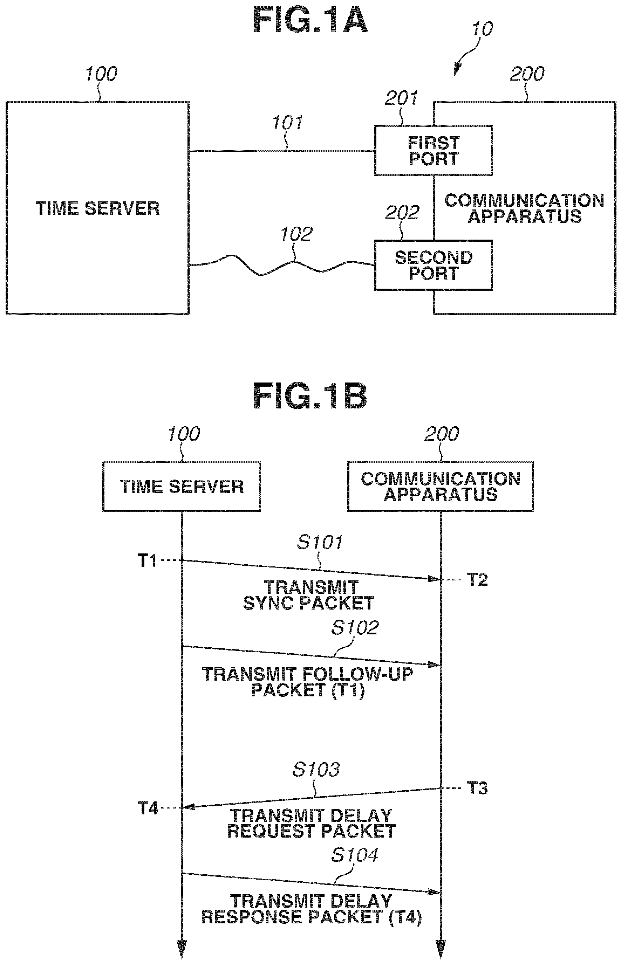

Fig. 1A illustrates an example of a configuration of a time synchronization system 10 according to an embodiment of the present invention. The time synchronization system 10 includes a time server 100 and a communication apparatus (a synchronization communication apparatus) 200. In the present embodiment, Precision Time Protocol (PTP) is used as a protocol for time synchronization. The time synchronization system 10 performs synchronization processing by using PTP packets. The PTP packets are time synchronization packets used to perform PTP-compliant time synchronization processing. The PTP packets include a synchronization (sync) packet (a packet including a sync message), a follow-up packet (a packet including a follow-up message), a delay request packet (a packet including a delay request message), and a delay response packet (a packet including a delay response message).

The time server 100 functions as a time source apparatus and includes an accurate clock therein. The time server 100 transmits PTP packets according to a PTP communication sequence. The communication apparatus 200 synchronizes with the time on the time server 100 based on the received PTP packets.

In the present embodiment, the communication apparatus 200 includes a first port 201 and a second port 202, which are two network interfaces (I/Fs) for communication. The first port 201 of the communication apparatus 200 is connected to the time server 100 via a first transmission path 101. The second port 202 of the communication apparatus 200 is connected to the time server 100 via a second transmission path 102. In the present embodiment, the first transmission path 101 and the second transmission path 102 are formed by Ethernet® cables. Alternatively, the first transmission path 101 and the second transmission path 102 may be formed by a combination of an interconnect such as InfiniBand®, Industrial Ethernet®, and the like. The first transmission path 101 and the second transmission path 102 are not limited thereto and may be any other type of transmission medium.

Next, a time synchronization sequence compliant with PTP will be described with reference to Fig. 1B. Fig. 1B illustrates a PTP packet communication sequence between the time server 100 and the communication apparatus 200.

In step S101, the time server 100 transmits a sync packet. In step S102, in a case where the time server 100 operates synchronization processing in two steps, the time server 100 transmits a follow-up packet. In step S103, the communication apparatus 200 that has received the sync packet and the follow-up packet transmits a delay request packet to the time server 100. In step S104, the time server 100 that has received the delay request packet transmits a delay response packet to the communication apparatus 200.

In Fig. 1B, time T1 indicates the time at which the time server 100 has transmitted the sync packet, and time T2 indicates the time at which the communication apparatus 200 has received the sync packet.

Time T3 indicates the time at which the communication apparatus 200 has transmitted the delay request packet, and time T4 indicates the time at which the time server 100 has received the delay request packet. The time T1 is stored in the follow-up packet (in step S102), and the time T4 is stored in the delay response packet (in step S104). The communication apparatus 200 can acquire the time T1 and the time T4 from the received follow-up packet (in step S102) and the received delay response packet (in step S104), respectively.

The communication apparatus 200 can acquire the four times T1 to T4 through the transmission and reception of the series of PTP packets. Based on the four times T1 to T4, the communication apparatus 200 can calculate the most recent transmission delay between the time server 100 and the communication apparatus 200, namely, an immediate (i.e. instant or current) transmission delay value (an immediate value) as expressed by Equation (1):

$$\text{Immediate transmission delay value} = ((T4 - T1) - (T3 - T2))/2 \quad (1)$$

Based on the four times T1 to T4, the communication apparatus 200 can also calculate a time difference between the time server 100 and the communication apparatus 200, namely, a time correction amount of the communication apparatus 200 as expressed by Equation (2):

$$\text{Time correction amount (using the immediate value)}$$

$$= (T2 - T1) - \text{Immediate transmission delay value}$$

$$= ((T2 - T1) - (T4 - T3))/2 \quad (2)$$

The time correction amount calculated by Equation (2) is a time correction amount using the immediate transmission delay value.

When it is assumed that the immediate transmission delay value calculated by Equation (1) has a small time variation, a statistical value (a statistical transmission delay value) can be used instead of the immediate transmission delay value. The statistical transmission delay value may be the average value of a plurality of immediate transmission delay values calculated based on a plurality of times of packet transmission and reception (the average value of a plurality of immediate transmission delay values calculated at a plurality of timings). Alternatively, the statistical transmission delay value may be the average value of filter values obtained by excluding a singular value (an extreme value) from the plurality of immediate transmission delay values. By using the statistical transmission delay value, synchronization accuracy degradation due to the impact of a temporary disturbance can be reduced.

The communication apparatus 200 can calculate the time correction amount of the communication apparatus 200 as expressed by Equation (3) by using the statistical transmission delay value:

$$\text{Time correction amount (using the statistical value)}$$

$$= (T2 - T1) - \text{Statistical transmission delay value} \quad (3)$$

The time correction amount calculated by Equation (2) or (3) is an offset value (an offset amount) of the communication apparatus 200 with respect to the time server 100. The communication apparatus 200 adjusts the time on the communication apparatus 200 so that the offset value is reduced to zero. As a result, the communication apparatus 200 can synchronize the time on the communication apparatus 200 with the time on the time server 100.

<Configuration of Communication Apparatus>

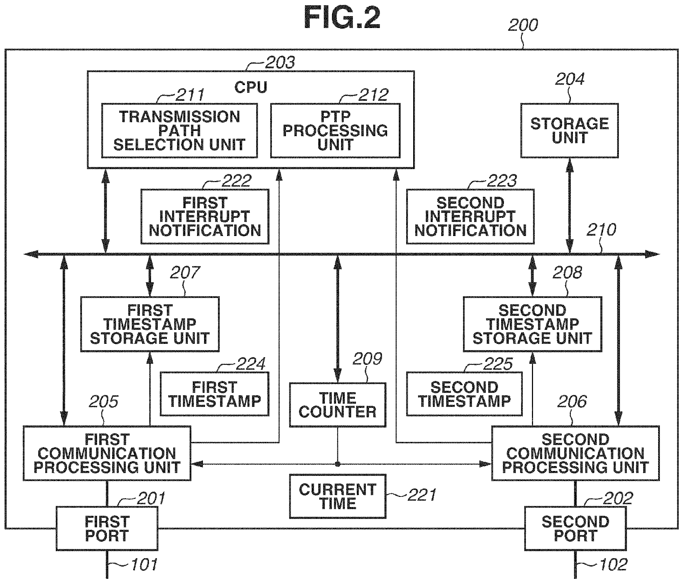

A configuration of the communication apparatus 200 will be described next with reference to Fig. 2. Fig. 2 illustrates an example of a configuration of the communication apparatus 200 according to the present embodiment.

As described above with reference to Fig. 1A, the communication apparatus 200 includes the first port 201 connected to the first transmission path 101 and the second port 202 connected to the second transmission path 102. The communication apparatus 200 further includes a central processing unit (CPU) 203, a storage unit 204, a first communication processing unit 205, a second communication processing unit 206, a first timestamp storage unit 207, a second timestamp storage unit 208, and a time counter 209. The CPU 203, the storage unit 204, the first communication processing unit 205, the second communication processing unit 206, the first timestamp storage unit 207, the second timestamp storage unit 208, and the time counter 209 are connected to each other by a system bus 210. In the present embodiment, the first port 201, the second port 202, the first communication processing unit 205, and the second communication processing unit 206 function as a communication unit.

The storage unit 204 stores packets transmitted and received (communicated) between the communication apparatus 200 and external apparatuses (including the time server 100) and programs (software) executed by the CPU 203.

The time counter 209 has a function related to the time on the communication apparatus 200. The counter value (the time) of the time counter 209 is counted up (updated) automatically (in real time). The count-up is implemented by using a clock signal (not illustrated) used in the communication apparatus 200. The time counter 209 also has a function of setting the counter value to a predetermined value based on a setting (a request) by the CPU 203. Further, the time counter 209 has a function of finely correcting an advance amount of the counter value, namely, how much the count-up value is to be advanced by the clock signal, based on a setting by the CPU 203. The counter value of the time counter 209 is supplied as a current time 221 to the first communication processing unit 205 or the second communication processing unit 206.

The first communication processing unit 205 and the second communication processing unit 206 are functional modules that perform communication processing and have similar functions. The first communication processing unit 205 is connected to the time server 100 by the first port 201 via the first transmission path 101. The second communication processing unit 206 is connected to the time server 100 by the second port 202 via the second transmission path 102. The communication apparatus 200 communicates with an external apparatus by using either the first communication processing unit 205 or the second communication processing unit 206. In this way, for example, even if a failure occurs in one of the first transmission path 101 and the second transmission path 102, the communication apparatus 200 can continue the communication by switching between the first communication processing unit 205 and the second communication processing unit 206. A transmission path selection unit 211 of the CPU 203 manages and controls whether to use the first communication processing unit 205 or the second communication processing unit 206, i.e., whether to use the first transmission path 101 or the second transmission path 102.

The function of the first communication processing unit 205 will now be described. In the present embodiment, the first communication processing unit 205 performs processing for transmitting and receiving Ethernet®-compliant packets between the communication apparatus 200 and an external apparatus. When a packet is transmitted from the communication apparatus 200, the first communication processing unit 205 transmits, via the first port 201, the packet stored in the storage unit 204. When the communication apparatus 200 receives a packet from an external apparatus, the first communication processing unit 205 stores the packet received via the first port 201 into the storage unit 204.

Upon transmitting or receiving a packet, the first communication processing unit 205 asserts a first interrupt signal by providing a first interrupt notification 222 to the CPU 203. Upon receiving a packet, the first communication processing unit 205 may notify the CPU 203 of the header information of the packet. The first communication processing unit 205 also detects link-down or link-up in the first port 201 by monitoring the first transmission path 101 connected to the first port 201. More specifically, the first communication processing unit 205 checks the state of communication with a counterpart device connected to the first transmission path 101. In the present embodiment, the counterpart device is the time server 100. The first communication processing unit 205 provides the first interrupt notification 222 also when the first communication processing unit 205 detects occurrence of link-down or link-up in the first port 201, namely, when there is a change in the state of the communication with the counterpart device connected to the first transmission path 101. The first interrupt notification 222 may include information indicating the state of the first transmission path 101 or the first port 201 (e.g., information indicating link-down or link-up in the first port 201). If the first communication processing unit 205 detects the occurrence of link-down or link-up in the first port 201, the first communication processing unit 205 may store the information indicating the state of the first transmission path 101 or the first port 201 (e.g., the information indicating link-down or link-up in the first port 201) into a status register (not illustrated) of the first communication processing unit 205.

The current time 221 is provided from the time counter 209 to the first communication processing unit 205. The first communication processing unit 205 detects (latches) and stores the current time 221 at which a packet is transmitted or received and outputs the current time 221 as a first timestamp 224 to the first timestamp storage unit 207.

The second communication processing unit 206 has functions similar to those of the first communication processing unit 205 and performs packet transmission and reception via the second port 202 and monitoring of the second transmission path 102. Upon transmitting or receiving a packet, the second communication processing unit 206 asserts a second interrupt signal by providing a second interrupt notification 223 to the CPU 203. The second communication processing unit 206 provides the second interrupt notification 223 also when the second communication processing unit 206 detects occurrence of link-down or link-up in the second port 202, namely, when there is a change in the state of communication with a counterpart device connected to the second transmission path 102. The second interrupt notification 223 may include information indicating the state of the second transmission path 102 or the second port 202 (e.g., information indicating link-down or link-up in the second port 202). If the second communication processing unit 206 detects occurrence of link-down or link-up in the second port 202, the second communication processing unit 206 may store the information indicating the state of the second transmission path 102 or the second port 202 (e.g., the information indicating link-down or link-up in the second port 202) into a status register (not illustrated) of the second communication processing unit 206.

The first timestamp storage unit 207 receives and stores the first timestamp 224 output from the first communication processing unit 205 (i.e., the current time 221 at which the first communication processing unit 205 has transmitted or received a packet). When the first timestamp storage unit 207 is accessed by a PTP processing unit 212 of the CPU 203, the first timestamp 224 is output to the PTP processing unit 212. The first timestamp storage unit 207 may include, for example, a memory such as a first-in first-out (FIFO) memory. In a case where the first communication processing unit 205 outputs the first timestamps 224 by separating the transmission timestamp and the reception timestamp or outputs the first timestamps 224 on a packet-type basis, the first timestamp storage unit 207 may include a plurality of FIFO memories and sort and store the first timestamps 224 into the plurality of FIFO memories.

The second timestamp storage unit 208 has functions and a configuration similar to those of the first timestamp storage unit 207. More specifically, the second timestamp storage unit 208 receives and stores the second timestamp 225 output from the second communication processing unit 206 (i.e., the current time 221 at which the second communication processing unit 206 has transmitted or received a packet). When the second timestamp storage unit 208 is accessed by the PTP processing unit 212 of the CPU 203, the second timestamp 225 is output to the PTP processing unit 212. The second timestamp storage unit 208 may include, for example, a memory such as a FIFO memory.

The CPU 203 is a functional block that controls the entire operation of the communication apparatus 200. In the present embodiment, the CPU 203 includes the transmission path selection unit 211 and the PTP processing unit 212. The transmission path selection unit 211 and the PTP processing unit 212 correspond to functional modules executed by the CPU 203 and can be executed in parallel.

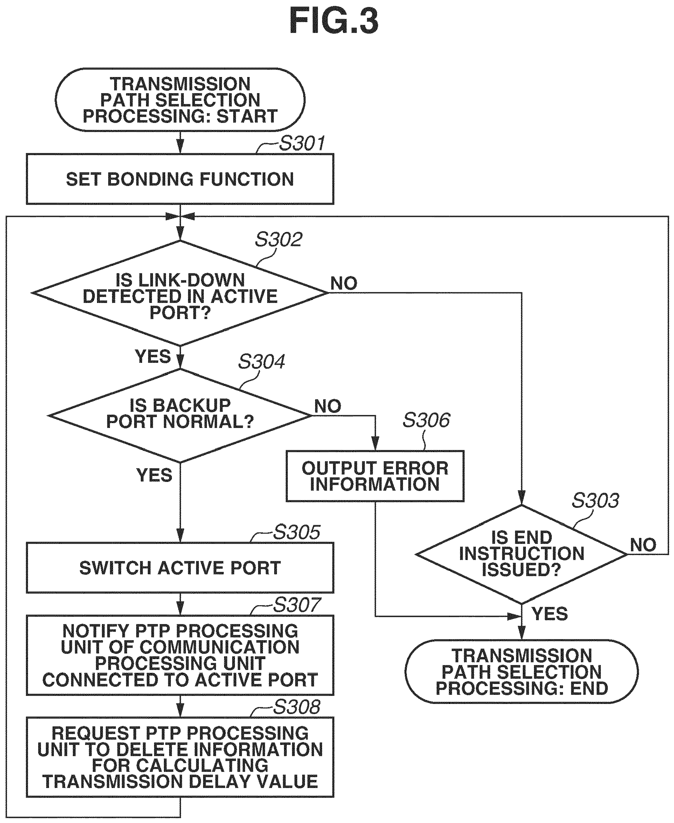

The transmission path selection unit 211 selects the transmission path to be used for communication with the time server 100 between the first transmission path 101 and the second transmission path 102. The transmission path selection unit 211 identifies the port (the first port 201 or the second port 202) connected to the selected transmission path and notifies the PTP processing unit 212 of the communication processing unit (the first communication processing unit 205 or the second communication processing unit 206) connected to the identified port. The processing by the transmission path selection unit 211 will be described below with reference to Fig. 3.

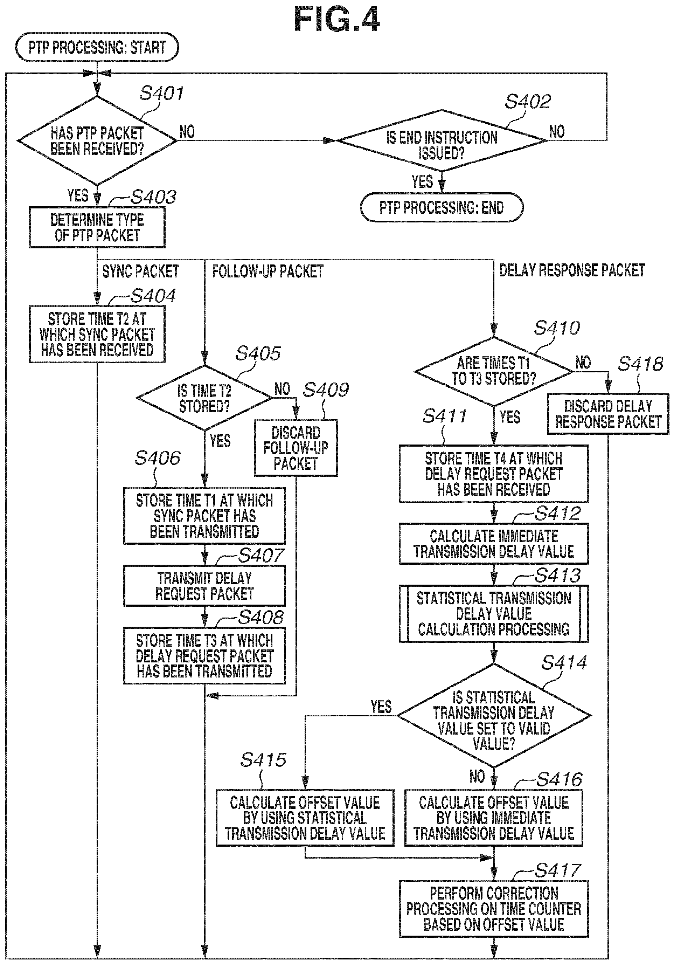

The PTP processing unit 212 performs PTP-compliant synchronization processing by using the communication processing unit (the first communication processing unit 205 or the second communication processing unit 206) identified by the transmission path selection unit 211. The PTP processing unit 212 acquires time information from the received PTP packets and the transmission and reception timestamps stored in the first timestamp storage unit 207 or the second timestamp storage unit 208. The PTP processing unit 212 calculates a time correction amount (an offset value) by using the acquired time information and corrects (adjusts) the counter value of the time counter 209 based on the offset value. The processing by the PTP processing unit 212 will be described below with reference to Fig. 4.

<Transmission Path Selection Processing>

Transmission path selection processing by the transmission path selection unit 211 will be described next with reference to Fig. 3.

Fig. 3 is a flowchart illustrating the transmission path selection processing according to the present embodiment.

In step S301, the transmission path selection unit 211 performs setting of a bonding function.

Bonding is a network redundancy technique for causing a transmission path to self-recover when a communication failure state occurs due to disconnection of the transmission path or the like. One of operation modes of the bonding function is an active-backup mode. The active-backup mode is a mode in which a plurality of physical network I/Fs are managed together and redundancy of communication paths is achieved by setting a part of the communication I/Fs to an active state for communication and setting the other communication I/F to a backup state. In the active-backup mode, when a communication I/F in the active state has a communication failure, a communication I/F in the backup state is switched to the active state and is used for communication. The active-backup mode enables, even if one side of the communication paths is disconnected, the communication to be continued by instantaneously switching between the active state and the backup state of the communication I/Fs. In the present embodiment, the plurality of physical network I/Fs corresponds to the first port 201 and the second port 202.

In step S301, as the initial setting, the transmission path selection unit 211 sets the first port 201 to the active state as a primary port unless the first port 201 is in a disconnected state (a communication failure state) due to, for example, breaking or pullout of the cable forming the first transmission path 101 connected thereto, power-off of the counterpart device, or the like. In other words, the transmission path selection unit 211 selects the first transmission path 101 as the transmission path to be used for communication with the time server 100. If one of the first port 201 and the second port 202 is in a disconnected state and the other is in a connectable state (a communication enabled state) at the stage of step S301, the transmission path selection unit 211 may set the port in the connectable state to the active state and set the port in the disconnected state to the backup state. In step S301, the transmission path selection unit 211 can detect whether the first port 201 and the second port 202 are in the connectable state, for example, through communication with the first communication processing unit 205 and the second communication processing unit 206. In the following description, the port set to the active state and the port set to the backup state will also be referred to as an active port and a backup port, respectively. The transmission path selection unit 211 notifies the PTP processing unit 212 of the communication processing unit connected to the first port 201 or the second port 202 that is set as the active port.

After setting the bonding function, in step S302, the transmission path selection unit 211 determines whether link-down is detected in the active port. This determination will be described using, as an example, a case where the active port is the first port 201. When the first interrupt signal is asserted by the provision of the first interrupt notification 222, the transmission path selection unit 211 can check the status register of the first communication processing unit 205 to determine whether link-down has occurred in the active port. Alternatively, when the first interrupt signal is asserted by the provision of the first interrupt notification 222, the transmission path selection unit 211 can check the information indicating the state of the first transmission path 101 or the first port 201 included in the first interrupt signal to determine whether link-down is detected in the active port.

In a case where the active port is the second port 202, a similar description can be applied to the second interrupt notification 223, the second communication processing unit 206, and the second transmission path 102.

If the transmission path selection unit 211 determines that link-down is not detected in the active port (NO in step S302) and if an end instruction is not issued (NO in step S303), the processing returns to step S302. If an end instruction is issued (YES in step S303), the transmission path selection unit 211 ends the processing illustrated in Fig. 3. The processing of step S303 is not limited to determining whether a specific end instruction is issued and may use a different end trigger.

If the transmission path selection unit 211 determines that link-down is detected in the active port (YES in step S302), then in step S304, the transmission path selection unit 211 determines whether the backup port is normal (i.e., whether the backup port is in a link-up state). In a case where the backup port is the second port 202, the transmission path selection unit 211 can perform this determination by checking the presence or absence of the second interrupt notification 223 from the second communication processing unit 206 or checking the status register of the second communication processing unit 206.

If the transmission path selection unit 211 determines that the backup port is normal (YES in step S304), then in step S305, the transmission path selection unit 211 switches the transmission path used for packet communication and switches the active port and the backup port. For example, in a case where the active port is the first port 201 and the backup port is the second port 202, the transmission path selection unit 211 controls the second port 202 to serve as the active port and the first port 201 to serve as the backup port. In this way, if the predetermined conditions (in steps S302 and S304) are satisfied, the transmission path selection unit 211 switches the transmission path used for packet communication and switches the active port and the backup port.

In step S307, the transmission path selection unit 211 notifies the PTP processing unit 212 of the communication processing unit connected to the first port 201 or the second port 202 that is set as the active port.

In step S308, the transmission path selection unit 211 requests the PTP processing unit 212 to delete information for use in transmission delay value calculation, which is managed by the PTP processing unit 212.

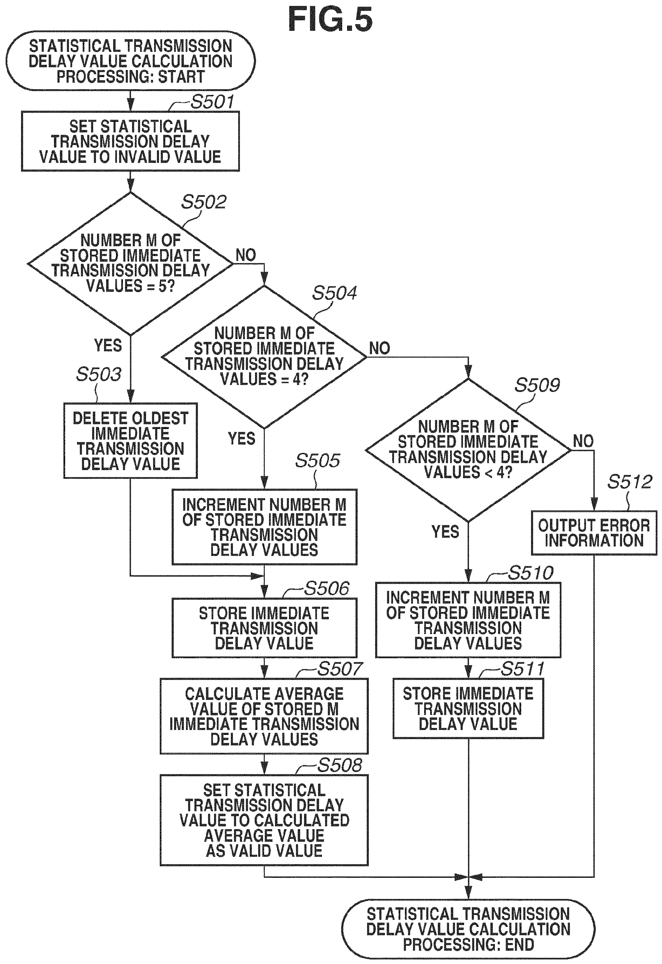

The information includes the number M of stored immediate transmission delay values, the stored immediate transmission delay values, and the stored first timestamps 224 and/or second timestamps 225 (the transmission timestamps and/or reception timestamps). The information for use in transmission delay value calculation will be described below with reference to Figs. 4 and 5. After the request to delete the information is made, the processing returns to step S302.

If the transmission path selection unit 211 determines that both the active port and the backup port are abnormal, i.e., in a link-down state (NO in step S304), then in step S306, the transmission path selection unit 211 detects an error and outputs error information. For example, the error information can be output to a display unit (not illustrated) of the communication apparatus 200 via an application installed on the communication apparatus 200. After the output of the error information, the transmission path selection unit 211 ends the processing illustrated in Fig. 3.

<PTP Processing>

PTP processing by the PTP processing unit 212 will be described next with reference to Fig. 4. Fig. 4 is a flowchart illustrating the PTP processing according to the present embodiment. To simplify the description, a case where the first port 201 is specified as the active port by the transmission path selection unit 211 will be described as an example. The PTP processing will be described also with reference to the PTP packet communication sequence illustrated in Fig. 1B.

In step S401, the PTP processing unit 212 determines whether the first communication processing unit 205 has received a PTP packet. The PTP processing unit 212 can determine whether the first communication processing unit 205 has received a PTP packet, by receiving from the first communication processing unit 205 the first interrupt signal asserted by the first interrupt notification 222. If the PTP processing unit 212 determines that the first communication processing unit 205 has received a PTP packet (YES in step S401), the processing proceeds to step S403, and the PTP processing unit 212 performs processing based on the type of the PTP packet (in steps S404 to S418). If the PTP processing unit 212 determines that the first communication processing unit 205 has not received a PTP packet (NO in step S401) and if an end instruction is not issued (NO in step S402), the processing returns to step S401. If an end instruction is issued (YES in step S402), the PTP processing unit 212 ends the processing illustrated in Fig. 4. The processing of step S402 is not limited to determining whether a specific end instruction is issued and may use a different end trigger.

In step S403, the PTP processing unit 212 determines the type of the received PTP packet. The determination can be performed by analyzing the header information of the received packet. If the received PTP packet is a sync packet, the processing proceeds to step S404. If the received PTP packet is a follow-up packet, the processing proceeds to step S405. If the received PTP packet is a delay response packet, the processing proceeds to step S410.

If the received PTP packet is a sync packet, then in step S404, the PTP processing unit 212 acquires and stores the time T2 at which the sync packet has been received. More specifically, the first communication processing unit 205 outputs, to the first timestamp storage unit 207, the current time 221 at which the first communication processing unit 205 has received the sync packet, as the first timestamp 224 (the reception timestamp). The first timestamp storage unit 207 stores the first timestamp 224. The PTP processing unit 212 acquires the time T2 by reading the first timestamp 224 from the first timestamp storage unit 207.

If the received PTP packet is a follow-up packet, then in step S405, the PTP processing unit 212 first determines whether the time T2 at which the sync packet has been received is stored. The PTP processing unit 212 can acquire and store the time T2 in step S404. If the time T2 is not stored (NO in step S405), then in step S409, the PTP processing unit 212 discards the follow-up packet.

If the time T2 is stored (YES in step S405), then in step S406, the PTP processing unit 212 reads, from the follow-up packet, the time T1 at which the sync packet has been transmitted by the time server 100 and stores the time T1. In step S407, the PTP processing unit 212 transmits a delay request packet. More specifically, the PTP processing unit 212 controls the first communication processing unit 205 to transmit, via the first port 201, the delay request packet stored in the storage unit 204. In step S408, the PTP processing unit 212 acquires and stores the time T3 at which the delay request packet has been transmitted. More specifically, the first communication processing unit 205 outputs, to the first timestamp storage unit 207, the current time 221 at which the first communication processing unit 205 has transmitted the delay request packet, as the first timestamp 224 (the transmission timestamp). The first timestamp storage unit 207 stores the first timestamp 224. The PTP processing unit 212 acquires the time T3 by reading the first timestamp 224 from the first timestamp storage unit 207.

If the received PTP packet is a delay response packet, then in step S410, the PTP processing unit 212 determines whether the times T1, T2, and T3 are stored. If the times T1, T2, and T3 are not stored (NO in step S410), then in step S418, the PTP processing unit 212 discards the delay response packet. If the times T1, T2, and T3 are stored (YES in step S410), then in step S411, the PTP processing unit 212 reads, from the received delay response packet, the time T4 at which the delay request packet has been received by the time server 100 and stores the time T4.

In step S412, the PTP processing unit 212 calculates an immediate transmission delay value as expressed by Equation (1) by using the times T1, T2, T3, and T4. After the calculation of the immediate transmission delay value is completed, in step S413, the PTP processing unit 212 calculates a statistical transmission delay value.

The processing for calculating a statistical transmission delay value in step S413 will now be described with reference to Fig. 5. Fig. 5 is a flowchart illustrating the processing for calculating a statistical transmission delay value.

In step S501, the PTP processing unit 212 sets the statistical transmission delay value to an invalid value. The invalid value is not limited to a specific value and may be any value as long as the value indicates invalidity. After setting the statistical transmission delay value to the invalid value, the PTP processing unit 212 checks the number M of stored immediate transmission delay values. If the number M is five (YES in step S502), the processing proceeds to step S503. If the number M is four (NO in step S502 and YES in step S504), the processing proceeds to step S505. If the number M is less than four (NO in step S504 and YES in step S509), the processing proceeds to step S510. If the number M is not less than four (NO in step S504 and NO in step S509), the processing proceeds to step S512.

If the number M of stored immediate transmission delay values is five (YES in step S502), then in step S503, the PTP processing unit 212 deletes the oldest immediate transmission delay value among the stored five immediate transmission delay values. After deleting the oldest immediate transmission delay value, in step S506, the PTP processing unit 212 stores the latest immediate transmission delay value calculated in step S412 in Fig. 4. At this point, the PTP processing unit 212 stores five immediate transmission delay values. In step S507, the PTP processing unit 212 calculates the average value of the stored five immediate transmission delay values. When a singular value (i.e., an extreme value) is included in the five immediate transmission delay values, the PTP processing unit 212 may calculate the average value of immediate transmission delay values excluding (without using) the singular value. After calculating the average value, in step S508, the PTP processing unit 212 sets the statistical transmission delay value to the calculated average value as a valid value. The PTP processing unit 212 then ends the processing illustrated in Fig. 5.

If the number M of stored immediate transmission delay values is four (YES in step S504), then in step S505, the PTP processing unit 212 increments (counts up) the number M of stored immediate transmission delay values by one, and the processing proceeds to step S506. The processing of steps S506 to S508 is as described above.

If the number M of stored immediate transmission delay values is less than four (YES in step S509), then in step S510, the PTP processing unit 212 increments (counts up) the number M of stored immediate transmission delay values by one. In step S511, the PTP processing unit 212 stores the latest immediate transmission delay value calculated in step S412. The PTP processing unit 212 then ends the processing illustrated in Fig. 5.

If the number M of stored immediate transmission delay values is not less than four, i.e., if the number M is equal to or greater than six, then in step S512, the PTP processing unit 212 detects an error and outputs error information. For example, the error information may be output to the display unit (not illustrated) of the communication apparatus 200 via the application installed on the communication apparatus 200. After the output of the error information, the PTP processing unit 212 ends the processing illustrated in Fig. 5.

Returning to the description of Fig. 4, in step S414, the PTP processing unit 212 determines whether the statistical transmission delay value is set to a valid value. In other words, the PTP processing unit 212 determines whether the processing of step S508 has been performed in the flowchart in Fig. 5. If the statistical transmission delay value is set to a valid value (YES in step S414), then in step S415, the PTP processing unit 212 calculates an offset value by using the statistical transmission delay value. The offset value can be calculated by Equation (3) in step S415. If the statistical transmission delay value is not set to a valid value (NO in step S414), then in step S416, the PTP processing unit 212 calculates an offset value by using the immediate transmission delay value. In other words, if the statistical transmission delay value is not set to a valid value, the PTP processing unit 212 calculates an offset value by using the immediate transmission delay value calculated first in step S412 after the active port is switched. The offset value can be calculated by Equation (2) in step S416.

After calculating the offset value by performing the processing of either step S415 or S416, in step S417, the PTP processing unit 212 performs correction processing on the time counter 209 based on the offset value. For example, if the offset value is greater than a predetermined value, the PTP processing unit 212 corrects the counter value of the time counter 209 by directly setting the counter value of the time counter 209. If the offset value is equal to or less than the predetermined value, the PTP processing unit 212 may adjust the advance amount of the counter value of the time counter 209.

Although not illustrated in Fig. 4, upon receiving from the transmission path selection unit 211 a request to delete the information for use in transmission delay value calculation (in step S308 in Fig. 3), the PTP processing unit 212 deletes (clears) the information for use in transmission delay value calculation.

In this way, as illustrated in Fig. 4, the PTP processing unit 212 performs the calculation of the transmission delay value (the immediate transmission delay value or the statistical transmission delay value) and the correction processing on the time counter 209. If the active port is switched (in step S305 in Fig. 3), the PTP processing unit 212 deletes (clears) the information for use in transmission delay value calculation, in response to a request from the transmission path selection unit 211. As a result, the setting situation of the valid value of the statistical transmission delay value changes, and the transmission delay value used to calculate the offset value is changed (which corresponds to step S415 or S416).

As described above, according to the present embodiment, if the necessity has arisen to switch the transmission path that is used for PTP packet communication for the synchronization processing with the time server 100, the communication apparatus 200 performs the synchronization processing by using the transmission delay value of the transmission path after the switching. After the immediate transmission delay value is calculated a predetermined number of times, the average value of the plurality of immediate transmission delay values is used as the transmission delay value of the transmission path after the switching. Before the immediate transmission delay value is calculated the predetermined number of times, the immediate transmission delay value calculated most recently is used as the transmission delay value of the transmission path after the switching. Then, an offset value is calculated by using the transmission delay value of the transmission path after the switching, and the time counter 209 is adjusted by using the offset value. In this way, the synchronization accuracy can be maintained before and after the switching of the transmission path.

In the above embodiment, if the statistical transmission delay value is not set to a valid value (NO in step S414 in Fig. 4), the PTP processing unit 212 calculates the offset value by using the immediate transmission delay value (in step S416). In such a case where the statistical transmission delay value is not set to a valid value, the PTP processing unit 212 may calculate the offset value by using a default value (a predetermined value) of the transmission delay value instead of using the immediate transmission delay value (in step S416). The default value of the transmission delay value is prepared for each of the first port 201 and the second port 202.

As one example, the PTP processing unit 212 may use the immediate transmission delay value or the statistical transmission delay value, which has been used in the PTP-compliant synchronization processing in the past, as the default value of the transmission delay value. Although the transmission delay value depends on the length of the cable forming the transmission path, the air temperature, and the like, the transmission delay value that has actually been used in the PTP-compliant synchronization processing in the past may be used as an effective transmission delay value.

More specifically, the PTP processing unit 212 stores in advance the immediate transmission delay value or the statistical transmission delay value, which is calculated in the synchronization processing using the first transmission path 101, as the default value of the transmission delay value for the first transmission path 101. Similarly, the PTP processing unit 212 stores in advance the immediate transmission delay value or the statistical transmission delay value, which is calculated in the synchronization processing using the second transmission path 102, as the default value of the transmission delay value for the second transmission path 102. If the switching of the active port occurs, an offset value may be calculated by using the default value of the transmission delay value for the transmission path connected to the active port after the switching (in step S416).

As another example, the PTP processing unit 212 may use the default value of the transmission delay value that is determined while the PTP-compliant synchronization processing is being performed. For example, by using the characteristic that the transmission delay value is proportional to the length of the transmission path, the communication apparatus 200 acquires data on the lengths of the first transmission path 101 and the second transmission path 102 in advance. The communication apparatus 200 may acquire data on the lengths of the first transmission path 101 and the second transmission path 102 that are manually measured using a measure. Alternatively, the CPU 203 of the communication apparatus 200 may acquire the lengths of the first transmission path 101 and the second transmission path 102 by performing time domain reflection (TDR) measurement. Assume here that the length of the first transmission path 101 is $L_1$, the length of the second transmission path 102 is $L_2$, the time synchronization processing is started using the first transmission path 101, and the statistical transmission delay value for the first transmission path 101 is $T_1$. In this case, a transmission delay value $T_2$ of the second transmission path 102 can be calculated by Equation (4) by using the statistical transmission delay value $T_1$ and the lengths $L_1$ and $L_2$ of the first transmission path 101 and the second transmission path 102 that are measured:

$$T_2 = (L_2 / L_1)T_1 \quad (4)$$

In other words, the transmission delay value $T_2$ of the second transmission path 102 is a value obtained by multiplying the statistical transmission delay value $T_1$ by the ratio of the length $L_2$ of the second transmission path 102 to the length $L_1$ of the first transmission path 101. The communication apparatus 200 may hold the transmission delay value $T_2$ of the second transmission path 102 as the default value of the transmission delay value to be used when the second transmission path 102 is used, and if the switching of the transmission path occurs, the default value may be used to calculate the offset value.

In addition, in a case where a difference between the default value described above and the immediate transmission delay value calculated in step S412 in Fig. 4 is equal to or greater than a predetermined value, the PTP processing unit 212 may avoid using the immediate transmission delay value, which has the difference equal to or greater than the predetermined value, for offset value calculation. For example, the PTP processing unit 212 may use the default value instead of the immediate transmission delay value having the difference equal to or greater than the predetermined value. Alternatively, the PTP processing unit 212 may avoid using the immediate transmission delay value, which has the difference equal to or greater than the predetermined value, for statistical transmission delay value calculation (e.g., avoid including this immediate transmission delay value in the number M of stored immediate transmission delay values).

Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to embodiments, it is to be understood that the invention is not limited to the disclosed embodiments.

**Claims**

1. A communication apparatus for connection to a time source apparatus via a first transmission path and a second transmission path, the communication apparatus comprising:

communication means for performing packet communication with the time source apparatus by using either the first transmission path or the second transmission path, the packet communication being compliant with Precision Time Protocol, PTP;

first time synchronization means for synchronizing a time on the communication apparatus with a time on the time source apparatus by using a transmission delay value of the first transmission path in a case where a transmission path used for the packet communication is the first transmission path;

switching means for switching the transmission path used for the packet communication in a case where a predetermined condition is satisfied; and

second time synchronization means for synchronizing the time on the communication apparatus with the time on the time source apparatus by using a transmission delay value of the second transmission path different from the transmission delay value of the first transmission path in a case where the transmission path used for the packet communication is switched from the first transmission path to the second transmission path.

2. The communication apparatus according to any preceding claim, further comprising first calculation means for calculating a plurality of transmission delay values at a plurality of timings by using time information obtained by the packet communication using the first transmission path and calculating an average value of the calculated plurality of transmission delay values as the transmission delay value of the first transmission path.

3. The communication apparatus according to any preceding claim, further comprising second calculation means for calculating a transmission delay value by using time information obtained by the packet communication using the second transmission path,

wherein the second time synchronization means is arranged to synchronize the time on the communication apparatus with the time on the time source apparatus by using, as the transmission delay value of the second transmission path, the transmission delay value calculated first by the second calculation means after the transmission path used for the packet communication is switched from the first transmission path to the second transmission path.

4. The communication apparatus according to claim 3,

wherein the second calculation means is arranged to calculate a plurality of transmission delay values at a plurality of timings by using the time information obtained by the packet communication using the second transmission path after the transmission path used for the packet communication is switched from the first transmission path to the second transmission path, and

wherein the second time synchronization means is arranged to synchronize the time on the communication apparatus with the time on the time source apparatus by using, as the transmission delay value of the second transmission path, an average value of the plurality of transmission delay values calculated by the second calculation means in the case where the transmission path used for the packet communication is switched from the first transmission path to the second transmission path.

5. The communication apparatus according to any preceding claim, further comprising setting means for setting the transmission delay value of the second transmission path to a predetermined value before the transmission path used for the packet communication is switched from the first transmission path to the second transmission path,

wherein the second time synchronization means is arranged to synchronize the time on the communication apparatus with the time on the time source apparatus by using the predetermined value in the case where the transmission path used for the packet communication is switched from the first transmission path to the second transmission path.

6. The communication apparatus according to claim 5, further comprising second calculation means for calculating a transmission delay value by using time information obtained by the packet communication using the second transmission path,

wherein the setting means is arranged to set, as the predetermined value, the transmission delay value calculated by the second calculation means before the transmission path used for the packet communication is switched from the first transmission path to the second transmission path.

7. The communication apparatus according to claim 5, wherein the setting means is arranged to set, as the predetermined value, a value that is the product of the transmission delay value of the first transmission path with a ratio of a length of the second transmission path to a length of the first transmission path.

8. The communication apparatus according to claim 7, wherein the setting means is arranged to measure the length of the first transmission path and the length of the second transmission path by performing Time Domain Reflection (TDR) measurement.

9. The communication apparatus according to any preceding claim, wherein the switching means is arranged to switch the transmission path used for the packet communication in a case where the transmission path used for the packet communication is in a communication disconnection state.

10. The communication apparatus according to any preceding claim, wherein the predetermined condition includes one or more of i) a link-down condition being detected in one of the first port and second port being actively used for packet transmission and ii) one of the first and second ports not being used for packet transmission is detected as being in a normal condition.

11. A control method for a communication apparatus connected to a time source apparatus via a first transmission path and a second transmission path, the control method comprising:

performing packet communication with a time source apparatus by using either a first transmission path or a second transmission path, the packet communication being compliant with Precision Time Protocol, PTP;
synchronizing a time on the communication apparatus with a time on the time source apparatus by using a transmission delay value of the first transmission path in a case where a transmission path used for the packet communication is the first transmission path;
switching the transmission path used for the packet communication in a case where a predetermined condition is satisfied; and
synchronizing the time on the communication apparatus with the time on the time source apparatus by using a transmission delay value of the second transmission path different from the transmission delay value of the first transmission path in a case where the transmission path used for the packet communication is switched from the first transmission path to the second transmission path.

12. A computer program comprising instructions, which upon execution cause a communication apparatus to perform the method of claim 11.

# FIG.1A

# FIG.1B

# FIG.2

200

203

**CPU**

211

**TRANSMISSION PATH SELECTION UNIT**

212

**PTP PROCESSING UNIT**

204

**STORAGE UNIT**

222

**FIRST INTERRUPT NOTIFICATION**

223

**SECOND INTERRUPT NOTIFICATION**

210

207

**FIRST TIMESTAMP STORAGE UNIT**

208

**SECOND TIMESTAMP STORAGE UNIT**

224

**FIRST TIMESTAMP**

209

**TIME COUNTER**

225

**SECOND TIMESTAMP**

205

**FIRST COMMUNICATION PROCESSING UNIT**

206

**SECOND COMMUNICATION PROCESSING UNIT**

**CURRENT TIME** 221

201

**FIRST PORT**

202

**SECOND PORT**

101

102

# FIG.3

TRANSMISSION PATH SELECTION PROCESSING: START

↓ S301

SET BONDING FUNCTION

S302

IS LINK-DOWN DETECTED IN ACTIVE PORT? — NO

YES ↓ S304

IS BACKUP PORT NORMAL? — NO

S306

OUTPUT ERROR INFORMATION

YES ↓ S305

SWITCH ACTIVE PORT

↓ S307

NOTIFY PTP PROCESSING UNIT OF COMMUNICATION PROCESSING UNIT CONNECTED TO ACTIVE PORT

↓ S308

REQUEST PTP PROCESSING UNIT TO DELETE INFORMATION FOR CALCULATING TRANSMISSION DELAY VALUE

S303

IS END INSTRUCTION ISSUED? — NO

YES ↓

TRANSMISSION PATH SELECTION PROCESSING: END

# FIG.4

# FIG.5

STATISTICAL TRANSMISSION
DELAY VALUE CALCULATION
PROCESSING: START

S501

SET STATISTICAL
TRANSMISSION DELAY
VALUE TO INVALID VALUE

S502

NUMBER M OF
STORED IMMEDIATE
TRANSMISSION DELAY
VALUES = 5?

NO

YES

S503

DELETE OLDEST
IMMEDIATE
TRANSMISSION
DELAY VALUE

S504

NUMBER M OF
STORED IMMEDIATE
TRANSMISSION DELAY
VALUES = 4?

NO

YES

S505

INCREMENT NUMBER M
OF STORED IMMEDIATE
TRANSMISSION
DELAY VALUES

S509

NUMBER M OF
STORED IMMEDIATE
TRANSMISSION DELAY
VALUES < 4?

NO

YES

S512

OUTPUT ERROR
INFORMATION

S506

STORE IMMEDIATE
TRANSMISSION
DELAY VALUE

S510

INCREMENT NUMBER M
OF STORED IMMEDIATE
TRANSMISSION
DELAY VALUES

S507

CALCULATE AVERAGE
VALUE OF STORED M
IMMEDIATE TRANSMISSION
DELAY VALUES

S511

STORE IMMEDIATE
TRANSMISSION
DELAY VALUE

S508

SET STATISTICAL
TRANSMISSION DELAY
VALUE TO CALCULATED
AVERAGE VALUE
AS VALID VALUE

STATISTICAL TRANSMISSION
DELAY VALUE CALCULATION
PROCESSING: END

Europäisches
Patentamt

European
Patent Office

Office européen
des brevets

# EUROPEAN SEARCH REPORT

Application Number

**EP 23 21 8147**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TAL MIZRAHI: "Slave diversity: Using multiple paths to improve the accuracy of clock synchronization protocols", PRECISION CLOCK SYNCHRONIZATION FOR MEASUREMENT CONTROL AND COMMUNICATION (ISPCS), 2012 INTERNATIONAL IEEE SYMPOSIUM ON, IEEE, 24 September 2012 (2012-09-24), pages 1-6, XP032257242, DOI: 10.1109/ISPCS.2012.6336621 ISBN: 978-1-4577-1714-7 * page 3, paragraph 3.2 - page 4, left-hand column, paragraph 1; figure 1 * * page 4, left-hand column, paragraph 4.1 - right-hand column, paragraph 2 * | 1-12 | INV. H04J3/06 H04J3/14 |
| A | CN 104 702 533 A (CHINA UNICOM) 10 June 2015 (2015-06-10) * abstract; claims 1,5 * | 8 | |
| A | WO 2014/101453 A1 (ZTE CORP [CN]) 3 July 2014 (2014-07-03) * abstract * * claim 1 * | 1-12 | TECHNICAL FIELDS SEARCHED (IPC) |
| A | US 2016/248577 A1 (ILYAS TALHA J [US] ET AL) 25 August 2016 (2016-08-25) * abstract * * claim 1 * | 1-12 | H04J |

The present search report has been drawn up for all claims

| Place of search | Date of completion of the search | Examiner |
|---|---|---|
| The Hague | 23 April 2024 | Pieper, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 8147

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2024

| Patent document cited in search report | | Publication date | Patent family member(s) | | Publication date |
|---|---|---|---|---|---|
| CN 104702533 | A | 10-06-2015 | NONE | | |
| WO 2014101453 | A1 | 03-07-2014 | CN | 103067113 A | 24-04-2013 |
| | | | WO | 2014101453 A1 | 03-07-2014 |
| US 2016248577 | A1 | 25-08-2016 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020184710 A